# EUROPEAN PATENT SPECIFICATION

(11) **EP 1 557 978 B1**
(45) Date of publication and mention of the grant of the patent: **19.03.2008**
(21) Application number: 03809683.0
(22) Date of filing: 13.08.2003
(51) Int. Cl.: H04L 29/06

(54) **A SECURITY MANAGEMENT METHOD FOR AN INTEGRATED ACCESS DEVICE OF NETWORK**
SICHERHEITSVERWALTUNGSVERFAHREN FÜR EINE INTEGRIERTE EINRICHTUNG EINES NETZWERKS
PROCEDE DE GESTION DE LA SECURITE POUR UN DISPOSITIF D'ACCES INTEGRE DU RESEAU

(30) Priority: 01.11.2002 CN 02147470; 01.11.2002 CN 02147472
(43) Date of publication of application: 27.07.2005
(73) Proprietor: Huawei Technologies Co., Ltd., Guangdong, Shenzhen 518057 (CN)
(72) Inventor: LUO, Bing, IP Dept, Huawei Service CentreBuilding, 518057 Shenzen, Guangdong (CN); ZHANG, Z., IP Dept, Huawei Service Centre Building, 518057 Shenzhen, Guangdong (CN); TANG, J., IP Dept, Huawei Service Centre Building, 518057 Shenzhen, Guangdong (CN); MA, J., IP Dept, Huawei Service Centre Building, 518057 Shenzhen, Guangdong (CN); WEI, Q., IP Dept, Huaweei Service Centre Building, 518057 Shenzhen, Guangdong (CN)
(74) Representative: Epping - Hermann - Fischer
(86) International application number: PCT/CN2003/000671
(87) International publication number: WO 2004/040845

(56) References cited:
- WO-A-02/080515
- WO-A2-02/11357
- CA-A- 2 293 989
- US-A1- 2001 044 893
- FERNANDO CUERVO NORTEL NETWORKS BRYAN HILL GOTHAM NETWORKS NANCY GREENE NORTEL NETWORKS CHRISTIAN HUITEMA TELCORDIA TECHNOLOGIES A: "Megaco Protocol" IETF STANDARD-WORKING-DRAFT, INTERNET ENGINEERING TASK FORCE, IETF, CH, vol. megaco, no. 4, 21 September 1999 (1999-09-21), XP015022848 ISSN: 0000-0004

## Description

### Field of the Invention

The present invention relates to a method for security management of network devices.

### Background of the Invention

There are many integrated access devices (IADs) in Next Generation Network (NGN); those devices are distributed in companies or homes in a wide and multiple manner, and are based on dynamic IPs. The numerous IADs can't be managed directly by the network management workstation in a concentrated manner; instead, they have to be managed indirectly through an IAD Management System (IADMS). At present, the management is usually implemented through the Media Gateway Control Protocol (MGCP or H248 protocol) disclosed in FERNANDO (VERVO NORTEL NETWORKS ET AL: " Megalo Protocol " IETF Standard-working-draft, INTERNET ENGINEERING TASK FORCE, IETF, CH, Vol. megalo, no. 4, 21 September 1999 ; in detail, the management comprises two aspects: management registration and service registration. At the management registration aspect, usually the existing devices are brought into management in two ways: manual addition and automatic detection through Simple Network Management Protocol (SNMP) protocol. Manual addition is to add a device to the network management system through inputting the device's IP manually, which consumes time and labor severely and has to track the changing IPs; therefore, this way results in high cost. With the method of automatic detection through SNMP, the NMS sends SNMP packets actively within certain IP address segment and finds the IAD utilizing a returned response to bring it into management; this way results in long detection time and low efficiency.

At the service registration aspect, MGCP has no security authentication mechanism on the application layer; though H248 protocol has security authentication mechanism on the application layer, this mechanism requires adding a security header to each H248 transaction request and returning a security authentication result in the transaction response; this way results in severely degraded H248 protocol processing efficiency and practicability. Due to above reasons, the current security authentication mechanism for IADs has the following problems: first, fake IADs can easily disguise themselves as true IADs to have sessions, with the cost burden on the true IADs, thus the subscriber's phone cost cannot be guaranteed; second, illegal IADs can easily attack SoftSwitch devices, and thus it is difficult to guarantee the system security, and illegal or fake devices may be added to management; in the case that many illegal or fake devices are added, legal devices may be flooded, and even system breakdown may occur.

### Summary of the Invention

An object of the present invention is to provide a highly efficient and secure method for security management of IADs.

To attain said object, a method for security management of IADs according to the present invention comprises:
step 1: when an account is opened for an Integrated Access Device (IAD), configuring the device identifier and authentication key of the IAD and IP address or domain name of the IAD Management System (IADMS) in the IAD; at the same time, configuring the authentication key in a SoftSwitch of the network;
step 2: the IAD sending a management registration message containing its device identifier and its IP address to the IADMS, the IADMS determining whether the IAD is a legal one according to the device identifier; if not, the IADMS rejecting the registration; otherwise the IADMS accepting the management registration;
step 3: the IAD sending a registration message containing a transaction ID and the device identifier to the SoftSwitch, according to the IP address of the SoftSwitch, for service registration.

Said method also comprises: after the service registration of the IAD is accomplished, the SoftSwitch authenticating the IAD periodically.

In said step 2, before sending the management registration message to the IADMS, the IAD sends a hand-shaking message (coldstar TRAP) to the IADMS.

Said method also comprises the following step between said step 2 and step 3: if determining a configuration file has to be loaded, IAD sending a request to the network for loading a configuration file, the network providing a configuration file to the IAD for initialization.

Said method further comprises:
step 4: after receiving the registration message from the IAD, the SoftSwitch determining the way of IP address allocation; if the subscriber employs a static IP address, the SoftSwitch determining whether the IP address and device identifier in the registration message are correct; if not, the SoftSwitch rejecting the registration; otherwise it returning a response for correctness;
if the subscriber employs a dynamic IP address, the SoftSwitch determining whether the device identifier in the registration message is correct; if not, the SoftSwitch rejecting the registration; otherwise it returning a response for correctness;
the SoftSwitch shall decide whether to initiate an authentication procedure to the IAD according to the configuration.
Step 5: the SoftSwitch authenticating service registration of the IAD; if the authentication fails, it rejecting the service registration of the IAD.

With above solution, the present invention has advantages in both management and security authentication: in the management registration aspect, it reduces manual intervention in bringing IADs into management, shortens the time thereof, and reduces the cost of management and maintenance; meanwhile, it ensures high security of management and prevents access to the network by illegal or fake devices; in the security authentication aspect, since the authentication for IADs is controlled by the SoftSwitch, the method not only ensures security of IAD management, but also improves efficiency of management.

### Brief Description of the Drawings

Fig. 1 is the flow chart of management registration used in an embodiment of the method of the present invention;
Fig. 2 is the flow chart of service registration used in an embodiment of the method of the present invention.

### Detailed Description of the Embodiment

Hereunder the present invention will be described in further detail with reference to the attached drawings.

In present network architecture, IADs are managed by IADMS, and the SoftSwitch accomplishes security authentication and service control for IADs. To implement management of IADs, IADs have to accomplish management registration to IADMS and accomplish service registration to the SoftSwitch respectively.

An example of the method for security management of IADs according to the present invention comprises the following procedures:
1. Opening an account: Before using an IAD, the subscriber has to open an account at the operator and write necessary information such as device identifier into the IAD, which serves as the basis of implementing security management;
2. Management registration: After the IAD is power on, it has to perform management registration to IADMS and receives basic configuration, e.g., IP address allocation, from IADMS;
3. Service registration: After the IAD accomplishes management registration, it has to perform service registration to the SoftSwitch before it uses the services;
4. Periodical authentication: During the IAD uses the services normally, the SoftSwitch sends authentication messages periodically to the IAD, to prevent fake IADs to be brought into the management.
   Through above procedures, the security management of IAD can be implemented, and fraud and embezzlement for IAD can be prevented.

The embodiment comprising above procedures employs MGCP/H.248 protocol.

Said procedure of opening an account means that an operator of the ISP configures or stores the following parameters in the IAD terminal when an account is opened for the IAD. Said parameters include the device identifier of IAD, authentication key of IAD, and the IP address or domain name of IADMS. In these parameters configured, the device identifier of IAD is the most important. It is unique, and is equivalent to the domain name in MGCP protocol or Message ID in H.248 protocol in actual application.

At account opening, the authentication key is also configured in the SoftSwitch.

In addition, during the parameter configuration procedure, if the IADMS or the TFTP/FTP (Trivial File Transfer Protocol/File Transfer Protocol) server for storing IAD configuration data or file doesn't exist or fails, in order to make the IAD initiate and operate normally, besides said device identifier, authentication key, and IP address or domain name of IADMS, the following parameters shall also be configured in the IAD: IP address or domain name of the SoftSwitch, IP address or domain name of the TFTP/FTP server, file name of the configuration data or the program, etc., which are necessary for normal operation of the IAD. Thus, if finding its program or configuration data is unavailable, the IAD can send a request to the TFTP/FTP server to obtain the configuration file. Therefore, the IAD in this example supports the IADMS to seek hardware, logic, and software version number via the SNMP interface and supports the IADMS to carry out setting and loading control for the software parameters (address of TFTP server, software path information, etc.).

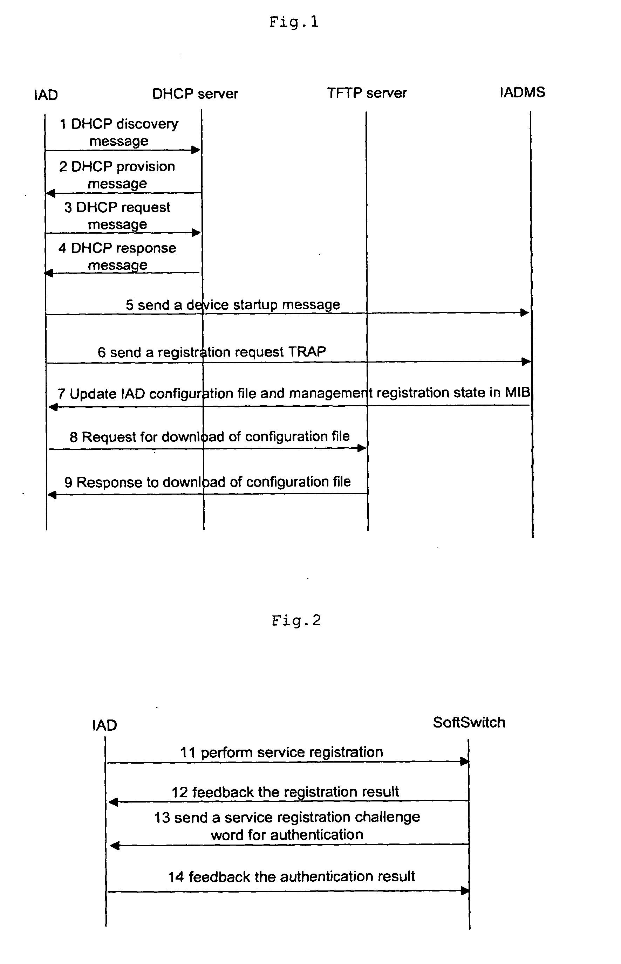

The management registration procedure is shown in Fig.1. First, after being power on, the IAD determines whether to utilize Dynamic Host Configuration Protocol (DHCP) protocol to obtain the IP address; if the IAD is not allocated with a static IP address, this procedure is required; therefore, at step 1, the IAD sends a DHCP discovery broadcast message; otherwise it skips over the IP address obtaining procedure and goes to step 5 directly. When the DHCP server in the network receives the request message from the DHCP client (i.e., the IAD), it sends a response of allocating an IP address to the requesting IAD at step 2; after receiving the message of allocating an IP address, the IAD sends an IP address request message to the DHCP server at step 3 if it accepts the IP address; the DHCP server returns address information, such as the allocated IP address, subnet mask, gateway address, and DNS server address etc., to the IAD at step 4. At step 5, the IAD sends a hand-shaking message coldstar TRAP (cold start trap message, wherein "TRAP" is a command in SNMP; coldstar (cold start) is a type of TRAPS, which is designed to report IAD start-up event to the SNMP network management workstation) to the IADMS; said TRAP comprises in order: TRAP time and TRAP OID (Object ID) (the two parameters are defined in standard coldstar TRAP). Next, at step 6, the IAD, according to the configured address information of IADMS, sends an IadNotifyTrap-type management registration TRAP data packet to the IADMS; said Trap comprises in order: TRAP time, TRAP OID, device identifier of IAD, and IP address of IAD itself (wherein, TRAP time is taken as the startup time of IAD; TRAP OID identifies the TRAP; device identifier of IAD and IP Address of IAD itself are used for management registration). At step 7, when receiving the management registration TRAP data packet from the IAD, the IADMS searches for the corresponding device identifier in the Management Information Base (MIB) of IAD; if it finds the corresponding device identifier, it stores the IP address and port number in the TRAP data packet, sets information items of IAD MIB configuration file (including TFTP server name and configuration file name), and sets the registration state of IAD MIB as "Registration succeeds"; otherwise it deems the IAD as illegal and sets the registration state of IAD MIB as "registration fails" directly. At step 8, the IAD determines whether to load the configuration file through determining whether its program or configuration data stored in itself is available; if the program or configuration data is available, loading is not required and the procedure goes to the service registration directly; otherwise loading is required; therefore, if determining the configuration file has to be loaded, the IAD sends a request to the TFTP Server to obtain the configuration file, the TFTP server responds to the request and provides the configuration file for initialization to the IAD at step 9; the IAD accomplishes the configuration procedure according to the received configuration file.

From step 1 to step 4 in the procedure as shown in Fig.1, the example follows a standard DHCP procedure; if the IP address can't be obtained through the DHCP procedure, the IAD will use the IP address previously stored or the default value. When the IADMS sets the registration state of IAD in the MIB, IAD deems that it has shaken hands with the IADMS and will no longer send IadNotifyTrap-type TRAP, and goes to step 8. If the IADMS has lost the start TRAP because it is busy or the network flow is too heavy, the IAD will carry out hand-shaking with the following method: sending IadNotifyTrap-type TRAP messages to the IADMS at the preset time interval. For instance, if the IADMS doesn't respond within one second after the first IadNotifyTrap is sent after the ColdStar, the IAD will send the second IadNotifyTrap; after that, if the IADMS doesn't respond within 3 seconds, the IAD will send the third IadNotifyTrap; then, if the IADMS doesn't response yet in 10 seconds, the IAD will set the registration state as "Timeout" in MIB and then goes to step 8. In step 8 and step 9 of the example, the message exchange and retransmission mechanism follows error control method in the standard TFTP/FTP procedure; if the TFTP server returns an error when the IAD requests to load the configuration file, or any unrecoverable error occurs during data transmission and results in failure of the loading procedure, the loading process will be skipped over. If the IAD itself stores available configuration data, it will go to the service registration procedure directly; otherwise it will reset the system and then resends a registration request to the IADMS; if, after the startup of IAD, the registration state of IAD in MIB is "Timeout", the IAD will send IadNotifyTrap at a certain time interval (e.g., 10 minutes) to the IADMS till the registration state of IAD in MIB is changed. In this example, whether to activate this function and the time interval can be set in MIB.

The service registration procedure is shown in Fig.2. The procedure is carried out between the IAD and the SoftSwitch. In detail, it comprises a standard registration procedure through MGCP/H.248 protocol and authentication of IAD by SoftSwitch.

First, at step 11, the IAD, according to the IP address of SoftSwitch in the configuration file (or the address information stored during the previous startup), sends a MGCP/H.248-compliant gateway registration message to the SoftSwitch; said message contains transaction ID, device identifier (domain name if MGCP protocol; MID if H.248 protocol); when receiving said registration message, the SoftSwitch executes the following steps:

determining the way of IP address allocation for IAD: if the IAD employs a static IP address, the SoftSwitch will further determine whether the IP address and device identifier of the IAD (domain name if MGCP; MID if H.248 protocol) correspond to those contained in the registration message; if not, the SoftSwitch will not accept the registration, and then returns a message to indicate the failed registration at step 12; if the IAD employs a dynamic IP address, the SoftSwitch will determine whether the device identifier contained in the registration message is correct; if not, the SoftSwitch will return a response to indicate an error at step 12; otherwise the SoftSwitch will return a response to indicate a correctness and decide whether to initiate an authentication procedure for the IAD according to the configuration.

If needing to initiate an authentication procedure for the IAD, the SoftSwitch will send a registration challenge word message to the IAD at step 13, to authenticate the IAD, said message comprising a 16-byte random number and a REQUEST ID. The random number and the REQUEST ID are sent to the IAD in a standard protocol message (extended packet); when receiving said message, the IAD carries out encryption calculation to the random number with its authentication key, and, at step 14, the IAD returns the encryption result and the REQUEST ID to the SoftSwitch. When receiving the result from the IAD, the SoftSwitch checks the REQUEST ID first; if the REQUEST ID is authenticated successfully, the SoftSwitch carries out the same calculation to the key of the IAD according to the device identifier and the 16-byte random number generated from itself, and then determines whether the two results are identical to each other; if not, the SoftSwitch will deem the IAD as illegal, send a notice to the IAD, and perform the subsequent process to the illegal IAD; otherwise the SoftSwitch will return a legal message to the IAD. If the REQUEST ID fails in the authentication, the SoftSwitch will discard the message and carry out abnormity utilizing the retransmission mechanism. In this example, the retransmission mechanism refers to: if the REQUEST ID fails in the authentication, the SoftSwitch will not feedback any message; thus, after sending the message, the IAD waits for a response (the registration duration is configurable); after a timeout of one second, the IAD resends the message; after a timeout of 2 seconds, the IAD resends the message; after a timeout of 5 seconds, the IAD resends the message, along with an alarm.

In actual application, the IAD will return the encryption result for each service registration challenge word from the SoftSwitches; meanwhile, the IAD only accept service registration challenge word messages from the legal SoftSwitches, and the subsequent registration failures will not affect the working state of IADs that have successfully registered.

The periodical authentication procedure is to prevent loss resulted from embezzlement of IP addresses of legal IADs by illegal IADs; the SoftSwitch sends service registration challenge words periodically to the IADs to authenticate them; or, whenever the SoftSwitch receives any message other than service registration messages from an unauthenticated IAD, the SoftSwitch will send a service challenge word to the IAD for authentication.

Similar to step 3 and step 4 in Fig.2, the periodical authentication procedure in this example is also carried out through sending a challenge word.

It should be noted that the IAD according to the present invention is also applicable to any intelligent terminal and gateway device, e.g., Ethernet Phone (EPHONE) or multimedia terminal, etc. in today's network; the SoftSwitch is also applicable to any Media Gateway Controller (MGC) in today's network.

## Claims

1. A method for security management of integrated access devices **characterised by** :
step 1: when an account is opened for an Integrated Access Device, IAD, configuring the device identifier and authentication key of the IAD and IP address or domain name of the IAD Management System, IADMS, in the IAD; at the same time, configuring the authentication key in a SoftSwitch of the network;
step 2: the IAD sending a management registration message containing its device identifier and its IP address to the IADMS, the IADMS determining whether the IAD is a legal one according to the device identifier; if not, the IADMS rejecting the registration; otherwise the IADMS accepting the management registration;
step 3: the IAD sending a registration message containing a transaction ID and the device identifier to the SoftSwitch, according to the IP address of the SoftSwitch, for service registration.

2. A method for security management of integrated access devices according to claim 1, also comprising: after the service registration of the IAD is accomplished, the SoftSwitch authenticating the IAD periodically.

3. A method for security management of integrated access devices according to claim 2, wherein in step 2, before sending the management registration message to the IADMS, the IAD sends a hand-shaking message, coldStar TRAP, to the IADMS.

4. A method for security management of integrated access devices according to claim 3, also comprising the following step between said step 2 and step 3: if determining a configuration file has to be loaded, IAD sending a request to the network for loading a configuration file, the network providing a configuration file to the IAD for initialization.

5. A method for security management of integrated access devices according to any one of the preceding claims, also comprising:
step 4: after receiving the registration message from the IAD, determining the way of IP address allocation; if the subscriber employs a static IP address, determining whether the IP address and device identifier in the registration message are correct; if not, rejecting the registration; otherwise returning a response for correctness;
if the subscriber employs a dynamic IP address, determining whether the device identifier in the registration message is correct; if not, rejecting the registration; otherwise returning a response for correctness;
the SoftSwitch deciding whether to initiate an authentication procedure to the IAD according to the configuration.

6. A method for security management of integrated access devices according to claim 5, also comprising:
step 5: the SoftSwitch authenticating service registration of the IAD; if the authentication fails, the SoftSwitch rejecting the service registration of the IAD.

7. A method for security management of integrated access devices according to claim 5, wherein before the IAD sends the management registration message to the IADMS, step 2 comprises:
after being power on, the IAD determining whether to obtain a dynamic IP address from the network; if a dynamic IP address is required, the IAD starts to obtain a dynamic IP address from the network.

8. A method for security management of integrated access devices according to claim 5, wherein said step 1 also comprises: configuring the following information to the IAD:
IP address or domain name of the SoftSwitch, IP address or domain name of the server storing configuration data of the IAD, file name of the configuration data.

## Patentansprüche

1. Verfahren zum Sicherheits-Management von integrierten Zugriffs-Einrichtungen, **gekennzeichnet durch**:
Schritt 1: Wenn ein Konto für die integrierte Zugriffs-Einrichtung, IAD, eröffnet wird, Konfigurieren der Einrichtungs-Kennung und des Authentifizierungs-Schlüssels der IAD und der IP-Adresse oder des Domain-Namens des IAD-Management-Systems, IADMS, in der IAD; gleichzeitig Konfigurieren des Authentifizierungs-Schlüssels in einem SoftSwitch des Netzwerks;
Schritt 2: Die IAD sendet eine Management-Registrierungs-Nachricht, die ihre Einrichtungs-Kennung und ihre IP-Adresse enthält, an das IADMS, das IADMS bestimmt, ob die IAD entsprechend der Einrichtungs-Kennung eine gültige ist; falls nicht, weist das IADMS die Registrierung zurück; andernfalls akzeptiert das IADMS die Management-Registrierung;
Schritt 3: Die IAD sendet eine Registrierungs-Nachricht, die eine Transaktions-Kennung und die Einrichtungs-Kennung enthält, zur Registrierung des Dienstes entsprechend der IP-Adresse des SoftSwitch an den SoftSwitch.

2. Verfahren zum Sicherheits-Management von integrierten Zugriffs-Einrichtungen gemäß Anspruch 1, das auch folgendes umfasst: Nachdem die Dienst-Registrierung ausgeführt ist, führt der SoftSwitch regelmäßig eine Authentifizierung der IAD durch.

3. Verfahren zum Sicherheits-Management von integrierten Zugriffs-Einrichtungen gemäß Anspruch 2, wobei in Schritt 2 vor dem Senden der Management-Registrierungs-Nachricht an das IADMS die IAD eine Handshake-Nachricht, coldStar TRAP, an das IADMS sendet.

4. Verfahren zum Sicherheits-Management von integrierten Zugriffs-Einrichtungen gemäß Anspruch 3, das auch den folgenden Schritt zwischen Schritt 2 und Schritt 3 enthält:
Wenn festgestellt wird, dass eine Konfigurations-Datei zu laden ist, sendet die IAD eine Anforderung an das Netzwerk zum Laden einer Konfigurations-Datei, und das Netzwerk liefert eine Konfigurations-Datei an die IAD zur Initialisierung.

5. Verfahren zum Sicherheits-Management von integrierten Zugriffs-Einrichtungen gemäß einem beliebigen der vorherigen Ansprüche, das auch folgendes umfasst:
Schritt 4: Nach dem Empfang der Registrierungs-Nachricht von der IAD Bestimmung der Art der IP-Adressen-Zuordnung; wenn der Teilnehmer eine statische IP-Adresse benutzt, Feststellen, ob die IP-Adresse und die Einrichtungs-Kennung in der Registrierungs-Nachricht korrekt sind; falls nicht, Zurückweisen der Registrierung; andernfalls Rückgabe einer Rückmeldung der Richtigkeit;
Wenn der Teilnehmer eine dynamische IP-Adresse benutzt, Feststellen, ob die Einrichtungs-Kennung in der Registrierungs-Nachricht korrekt ist; falls nicht, Zurückweisen der Registrierung; andernfalls Rückgabe einer Rückmeldung der Richtigkeit;
Der SoftSwitch entscheidet, ob eine Authentifizierungs-Prozedur für die IAD entsprechend der Konfiguration auszulösen ist.

6. Verfahren zum Sicherheits-Management von integrierten Zugriffs-Einrichtungen gemäß Anspruch 5, das auch folgendes umfasst:
Schritt 5: Der SoftSwitch authentifiziert die Dienst-Registrierung der IAD; wenn die Authentifizierung fehlschlägt, weist der SoftSwitch die Dienst-Registrierung der IAD zurück.

7. Verfahren zum Sicherheits-Management von integrierten Zugriffs-Einrichtungen gemäß Anspruch 5, wobei bevor die IAD die Management-Registrierungs-Nachricht zum IADMS sendet, Schritt 2 folgendes umfasst:
Nach dem Einschalten stellt die IAD fest, ob sie eine dynamische IP-Adresse vom Netzwerk beziehen muss; wenn eine dynamische IP-Adresse erforderlich ist, beginnt die IAD damit, eine dynamische IP-Adresse vom Netzwerk zu beziehen.

8. Verfahren zum Sicherheits-Management von integrierten Zugriffs-Einrichtungen gemäß Anspruch 5, wobei der Schritt 1 auch folgendes umfasst: Konfigurieren der folgenden Information an die IAD:
IP-Adresse oder Domain-Name des SoftSwitch, IP-Adresse oder Domain-Name des Servers, der die Konfigurationsdaten der IAD speichert, Dateiname der Konfigurationsdaten.

## Revendications

1. Méthode pour la gestion de la sécurité de dispositifs d'accès intégrés, **caractérisée par** :
Étape 1 : lorsqu'un compte est créé pour un équipement d'accès intégré IAD, configurer l'identifiant du dispositif et la clé d'authentification du IAD et l'adresse IP ou le nom de domaine du système de gestion de l'IAD, l'IADMS, dans l'IAD ; en même temps, configurer la clé d'authentification dans un commutateur logiciel dans le réseau ;
Étape 2 : l'IAD envoie un message d'enregistrement de gestion contenant son identifiant de dispositif et son adresse IP au IADMS, l'IADMS détermine si l'IAD est un IAD autorisé selon l'identifiant de dispositif ; si tel n'est pas le cas, l'IADMS rejette l'enregistrement, dans le cas contraire, l'IADMS accepte l'enregistrement de gestion ;
Étape 3 : l'IAD envoie au commutateur logiciel un message d'enregistrement contenant un identifiant de transaction et l'identifiant de dispositif, selon l'adresse IP du commutateur logiciel, pour l'enregistrement du service.

2. Méthode pour la gestion de la sécurité de dispositifs d'accès intégrés selon la revendication 1, comprenant également : une fois que l'enregistrement du service du IAD a été accompli, le commutateur logiciel authentifie l'IAD périodiquement.

3. Méthode pour la gestion de la sécurité de dispositifs d'accès intégrés selon la revendication 2, dans laquelle à l'étape 2, avant d'envoyer le message d'enregistrement de gestion au IADMS, l'IAD envoie un message d'établissement de liaison, coldStar TRAP, au IADMS.

4. Méthode pour la gestion de la sécurité de dispositifs d'accès intégrés selon la revendication 3, comprenant également l'étape suivante entre lesdites étapes 2 et 3 : si la détermination d'un fichier de configuration doit être chargée, l'IAD envoie une requête au réseau pour charger un fichier de configuration, le réseau fournit un fichier de configuration au IAD en vue de l'initialisation.

5. Méthode pour la gestion de la sécurité de dispositifs d'accès intégrés selon l'une quelconque des revendications précédentes, comprenant également :
Étape 4 : après avoir reçu le message d'enregistrement provenant du IAD, déterminer la manière de l'allocation de l'adresse IP ; si l'abonné utilise une adresse IP statique, déterminer si l'adresse IP et l'identifiant du dispositif contenus dans le message d'enregistrement sont corrects ; si tel n'est pas le cas, rejeter l'enregistrement ; dans le cas contraire, renvoyer une réponse d'exactitude ;
si l'abonné utilise une adresse IP dynamique, déterminer si l'identifiant de dispositif dans le message d'enregistrement est correct ; si tel n'est pas le cas, rejeter l'enregistrement, dans le cas contraire, renvoyer une réponse d'exactitude ;
le commutateur logiciel décide d'initier une procédure d'authentification du IAD selon la configuration.

6. Méthode pour la gestion de la sécurité de dispositifs d'accès intégrés selon la revendication 5, comprenant également :
Étape 5 : le commutateur logiciel authentifie l'enregistrement du service au IAD ; si l'authentification échoue, le commutateur logiciel rejette l'enregistrement du service du IAD.

7. Méthode pour la gestion de la sécurité de dispositifs d'accès intégrés selon la revendication 5, dans laquelle avant que l'IAD envoie le message d'enregistrement de gestion au IADMS, l'étape comprend :
après avoir été mis en marche, l'IAD détermine s'il doit obtenir du réseau une adresse IP dynamique ; si une adresse IP dynamique est requise, l'IAD commence la procédure d'obtention d'une adresse IP dynamique du réseau.

8. Méthode pour la gestion de la sécurité de dispositifs d'accès intégrés selon la revendication 5, dans laquelle ladite étape 1 comprend également : configurer les informations du IAD suivantes : adresse IP ou nom de domaine du commutateur logiciel, adresse IP ou nom de domaine du serveur stockant les données de configuration du IAD, le nom du fichier des données de configuration.
